**Europäisches Patentamt**

**European Patent Office**

**Office européen des brevets**

(19)

(11) Veröffentlichungsnummer: **0 194 509 B1**

(12)

# EUROPÄISCHE PATENTSCHRIFT

(45) Veröffentlichungstag der Patentschrift:
07.12.88

(51) Int. Cl.⁴: **B 65 G 15/08**

(21) Anmeldenummer: **86102493.3**

(22) Anmeldetag: **26.02.86**

(54) Schlauchbandförderanlage.

(30) Priorität: **27.02.85 DE 3506829**
**02.11.85 DE 3538990**

(43) Veröffentlichungstag der Anmeldung:
**17.09.86 Patentblatt 86/38**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**DE-A- 1 922 636**
**DE-A- 2 944 448**
**FR-A- 1 583 066**
**FR-A- 1 600 983**
**US-A- 3 630 340**

(73) Patentinhaber: **Continental Aktiengesellschaft,**
**Königsworther Platz 1, D-3000 Hannover 1 (DE)**

(72) Erfinder: **Engst, Wilhelm, Dietrichstrasse 9,**
**D-3008 Garbsen 4 (DE)**

## Beschreibung

Die Erfindung betrifft eine Schlauchband-Förderanlage gemäss dem Oberbegriff des Patentanspruchs 1.

Solche Schlauchband-Förderanlagen sind beispielsweise in der DE-PS 943817, der DE-OS 1934342 und der DE-PS 2944448 beschrieben. Bei den bekannten Anlagen dieser Art hat es sich als nachteilig erwiesen, dass die Trag- und Führungsrollen, an denen sich der Fördergurt abstützte und die den Fördergurt in die Schlauchform führten, starr und in unveränderlicher symmetrischer Verteilung um den Gurtquerschnitt herum angeordnet waren. Infolge dieser starren Rollenanordnung wurde dem Fördergurt ständig ein bestimmter durch die Position der Rollen exakt vorgegebener Schlauchquerschnitt aufgezwungen, und zwar unabhängig von der Form und Verteilung des jeweils transportierten Fördergutes. Insbesondere bei sperrigem Fördergut wurde hierbei das Gurtmaterial stark beansprucht, und es konnte zu Beschädigungen des Gurtes kommen.

Ein ganz wesentlicher Nachteil der bekannten Schlauchband-Förderanlagen bestand darin, dass die Montage des Fördergurtes ebenso wie Wartungs- und Reparaturarbeiten einen hohen Aufwand erforderten, da der Fördergurt durch die ihn rahmenartig umschliessenden Traggestelle, an denen die Rollen fest montiert waren, nur schwer zugänglich war.

Die starre, äquidistante Anordnung der Tragrollen bewirkte ausserdem, dass die Längskante des bei der Schlauchbildung übergeschlagenen Gurtrandes häufig mit der Stirnseite der nächsten seitlichen Tragrolle kollidierte. Auf die Dauer kam es hierdurch zu Beschädigungen dieser Gurtlängskante, wodurch aufwendige Reparaturen oder sogar das Auswechseln des gesamten Gurtes erforderlich wurden.

Es stellte sich daher die Aufgabe, eine Gurt-Förderanlage der besagten Gattung zu schaffen, die die genannten Mängel nicht aufwies und die sich insgesamt durch eine optimierte Gurtführung auszeichnete.

Diese Aufgabe wird erfindungsgemäss durch eine Gurt-Förderanlage gelöst, die die im kennzeichnenden Teil des Patentanspruchs 1 angegebenen Merkmale aufweist, deren Tragrollen also in Form an sich bekannter Rollengirlanden angeordnet sind, wobei in den schlauchförmig geschlossenen Abschnitten der Förderanlage je eine Rollengirlande etwa die obere bzw. die untere Hälfte des Schlauchbandquerschnittes umgreift. Vorzugsweise ist dabei jeweils einer unteren Rollengirlande eine obere Rollengirlande zugeordnet, die ihr entweder genau oder mit geringer Versetzung in Gurtlängsrichtung gegenüberliegt.

In einer besonders vorteilhaften Ausführungsform sind die Endpunkte der Rollengirlanden an den Schenkeln von nach oben U-förmig offenen Traggestellen gelagert. Durch diese Anordnung ist es ohne weiteres möglich, durch Lösen des einen Endlagers der oberen Rollengirlande diese Rollengirlande nach oben wegzuklappen, wobei durch das Schlauchband völlig frei von oben zugänglich wird. Hiermit ergibt sich eine wesentliche Vereinfachung bei der Montage des Fördergurtes sowie bei allen Instandsetzungs- und Wartungsarbeiten.

Eine weitere vorteilhafte Ausführungsform der Erfindung ist dadurch gekennzeichnet, dass an den oberen Rollengirlanden jeweils der Abstand zwischen denjenigen zwei Rollen, die beiderseits der Längskante des übergeschlagenen Gurt-Randbereichs zur Anlage kommen, grösser ist als die übrigen Rollenabstände. Hierdurch wird verhindert, dass diese Gurtlängskante bei leichten Schwankungen oder Verdrehungen des laufenden Schlauchbandes gegen die Stirnseite der ihr seitlich benachbarten Rolle stösst und dabei beschädigt wird. Dieser vergrösserte Rollenabstand kann insbesondere dadurch realisiert werden, dass zwischen den beiden besagten, beiderseits der Gurtlängskante angeordneten Rollen ein Verbindungsglied eingefügt ist, das länger ist als die übrigen Rollenzwischenglieder der oberen Girlande, wobei die Rollen selbst alle dieselben Abmessungen aufweisen. Vorzugsweise ist das verlängerte Zwischenglied etwa doppelt so lang wie die übrigen Zwischenglieder.

Zur weiteren Optimierung der Schlauchband-Führung wird ausserdem vorgeschlagen, im Bereich von Streckenabschnitten, in denen das Schlauchband eine Rechts- oder Linkskurve durchläuft und sich infolgedessen entsprechend nach rechts oder links um seine Längsachse verdreht, die Aufhängung der Rollengirlanden dieser Verdrehung anzupassen. Dies geschieht dadurch, dass die Girlanden-Endlager jeweils in einer um dasselbe Winkelmass um die Gurtlängsachse verdrehten Position an den Traggestellen der Förderanlage gelagert werden.

Der in der erfindungsgemässen Gurt-Förderanlage verwendete, zu einem Schlauchband formbare Fördergurt enthält eingebettete, in Gurtlängsrichtung durchlaufende fadenförmige Festigkeitsträger vorzugsweise ausschliesslich im Bereich seiner Längsränder, und zwar insbesondere nur soweit, wie diese Längsränder einander in den schlauchförmig geschlossenen Streckenabschnitten überlappen. Mittels dieser Längs-Festigkeitsträger wird die von einer Antriebswalze — die der Gurt am Umkehrpunkt der Förderanlage in Flachlage umschlingt — eingeleitete Antriebskraft gleichmässig auf den gesamten Gurt übertragen. Dabei bewirkt die Beschränkung der Längs-Festigkeitsträger auf die Gurt-Längsränder, dass der Gurt in den schlauchförmig geschlossenen Streckenabschnitten der Anlage die dort für das problemlose Durchlaufen von Rechts- oder Linkskurven erforderliche elastische Dehnbarkeit der Schlauchseitenwände und der Schlauchunterseite gewährleistet.

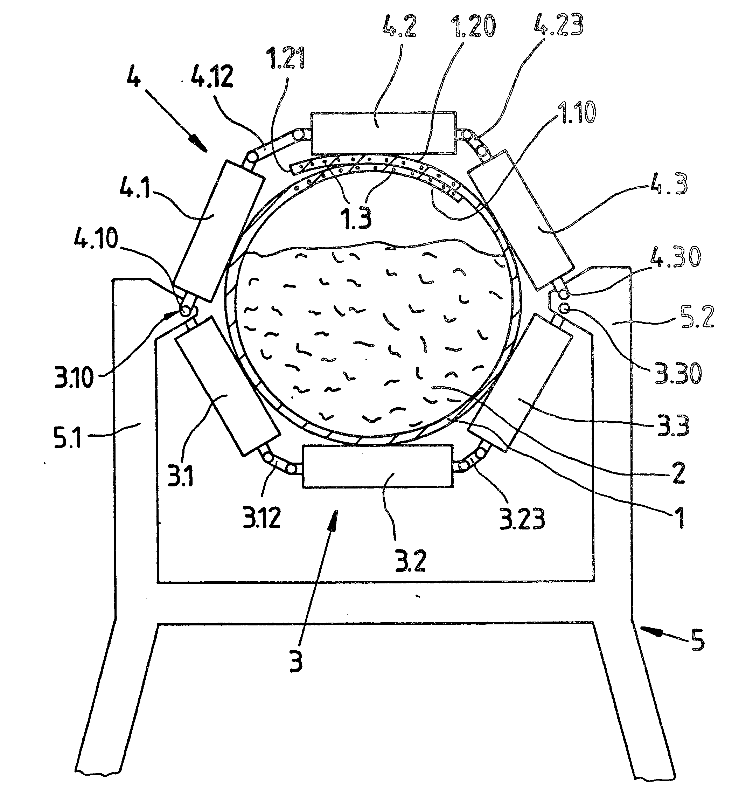

Die Zeichnung erläutert die vorliegende Erfindung anhand einer stark vereinfachten Darstellung ihrer wesentlichen Merkmale:

Der zu einem Schlauchband geformte und das Fördergut 2 einschliessende Fördergurt 1, der in bekannter Weise z.B. aus einem synthetischen Kautschuk hergestellt ist, wird an der unteren Hälfte seines Querschnitts durch die Rollen 3.1, 3.2 und 3.3 der unteren Rollengirlande 3 abgestützt während die obere Hälfte seines Querschnitts durch die Rollen 4.1, 4.2 und 4.3 der oberen Rollengirlande 4 so geführt wird, dass die Gurtränder 1.10 und 1.20 einander überlappen.

Wie beschrieben, enthält der Fördergurt nur in seinen einander überlappenden Randbereichen 1.10 und 1.20 eingebettete, in Längsrichtung durchlaufende Festigkeitsträger 1.3, z. B. in der Form von Stahldrahtseilen. Der Mittelteil des Gurtes kann übliche in Quer- oder Diagonalrichtung verlaufende, in der Zeichnung nicht dargestellte Verstärkungseinlagen enthalten, die als Durchschlagschutz dienen und die Tragfähigkeit des Gurtes erhöhen.

Die Rollengirlanden 3 und 4 sind an den Schenkeln 5.1 und 5.2 des Traggestells 5 gelenkig gelagert, und die auf ihren Achsen drehbaren Rollen sind über Zwischenglieder 3.12, 3.23 bzw. 4.12, 4.23 gelenkig miteinander verbunden. Das verlängerte Zwischenglied 4.12 sorgt dafür, dass die Längskante 1.21 des übergeschlagenen Gurtrandes 1.20 einen auch bei Schwankungen des Gurtverlaufes ausreichenden Abstand zu der seitlich benachbarten Rolle 4.1 einhält, um Kollisionen der Gurtkante 1.21 mit der Stirnseite dieser Rolle 4.1 und somit Beschädigungen der Gurtkante zu vermeiden.

## Patentansprüche

1. Schlauchband-Förderanlage mit einem aus Gummi oder gummiähnlichen Kunststoffen hergestellten Fördergurt, der in Gurtlängsrichtung durchlaufende fadenförmige Festigkeitsträger enthält und der durch Überlappen seiner Längsränder zu einem Schlauchband schliessbar ist, das sich ringsum an Tragrollen abstützt, dadurch gekennzeichnet, dass die Tragrollen (3.1, 3.2, 3.3; 4.1, 4.2, 4.3) in Form von Rollengirlanden angeordnet sind, wobei in den schlauchförmig geschlossenen Streckenabschnitten der Förderanlage Rollengirlanden (3) vorgesehen sind, die etwa die untere Hälfte des Schlauchbandquerschnittes umgreifen, sowie Rollengirlanden (4) die etwa die obere Hälfte des Schlauchbandquerschnittes umgreifen.

2. Förderanlage nach Anspruch 1, dadurch gekennzeichnet, dass in den schlauchförmig geschlossenen Streckenabschnitten jeweils einer unteren Rollengirlande (3) eine obere Rollengirlande (4) gegenüberliegt oder ihr mit geringer Versetzung in Gurtlängsrichtung zugeordnet ist.

3. Förderanlage nach Anspruch 1 oder 2, dadurch gekennzeichnet, dass die Endpunkte (3.10, 3.30; 4.10, 4.30) der Rollengirlanden (3, 4) an den Schenkeln (5.1, 5.2) nach oben U-förmig offener Traggestelle (5) gelagert sind.

4. Förderanlage nach einem der Ansprüche 1 bis 3, gekennzeichnet durch obere Rollengirlanden (4), bei denen der Abstand zwischen den zwei Rollen (4.1, 4.2) die beiderseits der Längskante (1.21) des übergeschlagenen Gurt-Randbereichs (1.20) zur Anlage kommen, grösser ist als die übrigen Rollenabstände.

5. Förderanlage nach Anspruch 4, dadurch gekennzeichnet, dass die die Rollen (4.1, 4.2) miteinander verbindenden Zwischenglieder (4.12) länger sind als die übrigen Zwischenglieder (4.23) während alle Rollen gleiche Abmessungen haben.

6. Förderanlage nach Anspruch 5, dadurch gekennzeichnet, dass die Zwischenglieder (4.12) etwa doppelt so lang sind wie die übrigen Zwischenglieder (4.23).

7. Förderanlage nach einem der Ansprüche 1 bis 6, dadurch gekennzeichnet, dass im Bereich von Streckenabschnitten der Förderanlage, in denen der schlauchförmig geschlossene Gurt eine Rechts- oder Linkskurve durchläuft und sich infolgedessen entsprechend nach rechts oder links um seine Längsachse verdreht, die Girlanden-Endlager (3.10, 4.10, 3.30, 4.30) jeweils in einer um dasselbe Winkelmass um die Gurtlängsachse verdrehten Position an den Tragstellen (5) gelagert sind.

8. Förderanlage nach einem der Ansprüche 1 bis 7, dadurch gekennzeichnet, dass der Fördergurt (1) ausschliesslich im Bereich seiner Längsränder (1.10, 1.20) — insbesondere nur soweit, wie diese Randbereiche einander in den schlauchförmig geschlossenen Streckenabschnitten der Förderanlage überlappen — eingebettete, in Gurtlängsrichtung durchlaufende fadenförmige Festigkeitsträger enthält.

## Claims

1. Tubular belt conveyor having a conveyor belt, which is made of rubber or rubber-like plastics materials and contains filamentary reinforcing members which extend in the longitudinal direction of the belt, the conveyor belt being closable by overlapping its longitudinal edges to form a tubular belt which is supported all-around by supporting rollers, characterised in that the supporting rollers (3.1, 3.2, 3.3; 4.1, 4.2, 4.3) are disposed in the form of roller garlands, roller garlands (3) being provided in the path sections of the conveyor which are closed in a tubular manner and surrounding substantially the lower half of the cross-section of the tubular belt, and roller garlands (4) being provided which surround substantially the upper half of the cross-section of the tubular belt.

2. Conveyor according to claim 1, characterised in that an upper roller garland (4) is situated opposite a respective roller garland (3) in the path sections which are closed in a tubular manner or is slightly offset relative thereto in the longitudinal direction of the belt.

3. Conveyor according to claim 1 or 2, characterised in that the end points (3.10, 3.30; 4.10, 4.30) of the roller garlands (3, 4) are mounted on the legs (5.1, 5.2) of a supporting frame (5) which is open towards its upper end in a U-shaped manner.

4. Conveyor according to one of claims 1 to 3, characterised by upper roller garlands (4), wherein the spacing between the two rollers (4.1, 4.2), which about on both sides of the longitudinal edge (1.21) of the looped-over edge region (1.20) of the belt, is greater than the spacings between the other rollers.

5. Conveyor according to claim 4, characterised in that the intermediate members (4.12), which connect the rollers (4.1, 4.2) together, are longer than the other intermediate members (4.23), while all the rollers have identical dimensions.

6. Conveyor according to claim 5, characterised in that the intermediate members (4.12) are substantially twice as long as the other intermediate members (4.23).

7. Conveyor according to one of claims 1 to 6, characterised in that the end bearings (3.10, 4.10, 3.30, 4.30) of the garlands are mounted on the respective supporting frames (5) in a position which is rotated through the same angle about the longitudinal axis of the belt in the region of path sections of the conveyor in which the belt, which is closed in a tubular manner, travels through a right-hand or left-hand curve and, in consequence, is rotated accordingly to the right or left about its longitudinal axis.

8. Conveyor according to one of claims 1 to 7, characterised in that the conveyor belt (1) contains filamentary reinforcing members, which travel in the longitudinal direction of the belt and are embedded exclusively in the region of its longitudinal edges (1.10, 1.20) — more especially only insofar as these edge regions overlap one another in the path sections of the conveyor which are closed in a tubular manner.

## Revendications

1. Convoyeur à bande tubulaire comportant une bande d'entraînement réalisée en caoutchouc ou en des matières plastiques analogues au caoutchouc et contenant des éléments de consolidation en forme de fils s'étendant dans la direction longitudinale de la bande, et pouvant être refermée par mise en superposition de ses bors longitudinaux de manière à former une bande tubulaire qui s'appuie, sur son pourtour, sur des galets de support, caractérisé en ce que les galets de support (3.1, 3.2, 3.3; 4.1, 4.2, 4.3) sont disposés sous la forme de guirlandes de galets, auquel cas il est prévu, dans les sections fermées en forme de tube du convoyeur, des guirlandes de galets (3) qui entourent approximativement la moitié inférieure de la section transversale de la bande tubulaire, ainsi que des guirlandes de galets (4) qui entourent approximativement la moitié supérieure de la section transversale de la bande tubulaire.

2. Convoyeur selon la revendication 1, caractérisé en ce que dans les sections fermées en forme de tube, mune guirlande supérieure de galets (4) est disposée respectivement en vis-à-vis d'une guirlande inférieure de galets (3) ou lui est associée avec un léger décalage dans la direction longitudinale de la bande.

3. Convoyeur selon la revendication 1 ou 2, caractérisé en ce que les points d'extrémité (3.10, 3.30; 4.10, 4.30) des guirlandes des galets (3, 4) sont tourillonnés sur les branches (5.1, 5.2) de bâtis de support (5) ouverts vers le haut en forme de U.

4. Convoyeur selon l'une des revendications 1 à 3, caractérisé par des guirlandes supérieures de galets (4), dans lesquelles la distance entre les deux galets (4.1, 4.2), qui viennent s'appliquer des deux côtés de l'arête longitudinale (1.21) de la zone marginale (1.20) de la ceinture, placée en superposition sur cette dernière, est supérieure aux autres distances entre les galets.

5. Convoyeur selon la revendication 4, caractérisé en ce que les organes intermédiaires (4.12) reliant entre eux les galets (4.1, 4.2) sont plus longs que les autres organes intermédiaires (4.23), tandis que tous les galets possèdent des dimensions identiques.

6. Convoyeur selon la revendication 5, caractérisé en ce que les organes intermédiaires (4.12) possèdent une longueur égale approximativement au double de celle des autres organes intermédiaires (4.23).

7. Convoyeur selon l'une des revendications 1 à 6, caractérisé en ce que dans la zone de sections du convoyeur, dans lesquelles la bande fermée en forme de tube se déplace suivant une courbe tournant à droite ou à gauche et est par conséquent tordue de ce fait vers la droite ou vers la gauche autour de son axe longitudinal, les paliers d'extrémité (3.10, 4.10, 3.30, 4.30) des guirlandes sont tourillonnés respectivement dans des positions décalées de la même valeur angulaire autour de l'axe longitudinal de la bande, sur les bâtis de support (5).

8. Convoyeur selon l'une des revendications 1 à 7 caractérisé en ce que la bande convoyeuse (1) contient des éléments de consolidation en forme de fils s'étendant dans la direction longitudinale de la bande et insérés exclusivement dans la zone des bords longitudinaux (1.10, 1.20) de la bande — notamment uniquement dans la mesure où ces zones marginales se chevauchent dans les sections fermées en forme de tube du convoyeur.